# EUROPEAN PATENT SPECIFICATION

(11) **EP 4 446 829 B1**
(45) Date of publication and mention of the grant of the patent: **03.12.2025**
(21) Application number: 23167335.1
(22) Date of filing: 11.04.2023
(51) Int. Cl.: G05B 19/042, H02J 7/00

(54) **METHOD AND SYSTEM FOR AUTOMATED MANAGEMENT OF CHARGING UNIT**
VERFAHREN UND SYSTEM ZUR AUTOMATISIERTEN VERWALTUNG EINER LADEEINHEIT
PROCÉDÉ ET SYSTÈME DE GESTION AUTOMATISÉE D'UNITÉ DE CHARGE

(43) Date of publication of application: 16.10.2024
(73) Proprietor: Siemens Aktiengesellschaft, 80333 München (DE)
(72) Inventor: BEHERA, Jitendra, 560100 Bangalore (IN); DREWEKE, Alexander, 91085 Weisendorf (DE); GUPTA, Saikat, 90443 Nürnberg (DE); JAIN, Geetansh, 110085 Delhi (IN); NEMA, Arpit, 452012 Indore, Madhya Pradesh (IN); SHUKLA, Satyendra Nath, 231215 Sonbhadra, Uttar Pradesh (IN)
(74) Representative: Patentanwaltskanzlei WILHELM & BECK

(56) References cited:
- EP-A1- 4 040 567
- US-A1- 2017 190 259

## Description

The present disclosure generally relates to charging units for electrical applications, such as charging of electric vehicles and, more specifically, to a method and system for automated management of a charging unit for proactive automated diagnostics thereof.

As the number of electric vehicles on the road continues to increase, there is a growing need for a reliable and efficient charging infrastructure. This infrastructure consists of multiple charging units assembled with various components such as power converters, open controllers, PLCs, and protection systems, among others. While these components work together to ensure that the charging units operate efficiently, faults can occur due to hardware or software failures, which can lead to downtime, maintenance costs, and reduced customer satisfaction. For efficient operations of a charging unit, proactive system monitoring and advance diagnostics approach is required to troubleshoot error and fix issues automatically. As the charging infrastructure grows, an automated solution becomes even more critical in tracking and diagnosing faults, reducing downtime, maintenance costs, and improving customer satisfaction.

In particular, an automated solution is needed that can diagnose faults in near real-time and perform critical PLC configuration modifications for the charging units. However, this can be challenging, as some internal system logs cannot be transferred to the cloud, and it is difficult to connect to third-party components through any application. Additionally, it is essential to view the status and logs of the charging unit and its components, make a visual trace with defined parameters, and replay fault scenarios to identify the root cause of the issue, none of which is efficiently possible with known diagnostics systems.

Overall, an efficient and reliable charging infrastructure is needed to support the growth of electric vehicles. By implementing an automated system that can diagnose and fix faults in near real-time, businesses can operate more efficiently and reduce maintenance costs. Document WO2021/065959 A1 discloses a charge control apparatus applied for a system provided with a secondary battery and a charger electrically connected to the secondary battery, the charge control apparatus performing a charge control of the secondary battery by operating the charger. Document US2017/190259 A1 discloses a system to provide battery stored power to an electric vehicle. The battery carrier includes electronics that include communication circuitry for connecting to a server over a network and circuitry for communicating with batteries when present in slots of the battery carrier to identify a level of charge.

In light of the above, the present disclosure seeks to overcome these challenges by securely connecting to charging unit and perform remote diagnostics automatically, find the root cause, fix the issue (if possible), notify any hardware related error to service engineer, so as to have an overall high uptime availability of the charging unit.

The object of the present disclosure is achieved by a computer-implemented method for automated management of a charging unit for electrical applications according to claim 1. The method comprises analysing, by a processor, one or more charging parameters of the charging unit. The method further comprises determining, by the processor, a deviation in at least one of the one or more charging parameters of the charging unit by comparing with respective one or more threshold limits therefor. The method further comprises generating, by the processor, an error message indicative of the determined deviation in the at least one of the one or more charging parameters of the charging unit. The method further comprises receiving, by a server, in secure connection with the processor, the error message. The method further comprises determining, by the server, a corrective action for the charging unit as defined by a rules engine based on the generated error message. The method further comprises transmitting, by the server, via the secure connection, the determined corrective action to the processor. The method further comprises executing, by the processor, the determined corrective action for the charging unit.

In one or more embodiments, the method further comprises checking, by the processor, if the deviation in the at least one of the one or more charging parameters of the charging unit persists, by comparing with the respective one or more threshold limits therefor, post execution of the determined corrective action therefor. The method further comprises fetching, by the processor, event logs of the charging unit in case of the deviation in the at least one of the one or more charging parameters of the charging unit persists post execution of the determined corrective action therefor. The method further comprises receiving, by the server, in secure connection with the processor, the event logs of the charging unit. The method further comprises analysing, by the server, the event logs of the charging unit. The method further comprises determining, by the server, a remedial action for the charging unit as defined by the rules engine based on the analysis of the event logs. The method further comprises transmitting, by the server, via the secure connection, the determined remedial action to the processor. The method further comprises executing, by the processor, the determined remedial action for the charging unit.

In one or more embodiments, the method further comprises checking, by the processor, if the deviation in the at least one of the one or more charging parameters of the charging unit persists, by comparing with the respective one or more threshold limits therefor, post execution of the determined remedial action therefor. The method further comprises generating, by the processor, a fault signal indicative of a fault in the charging unit in case of the deviation in the at least one of the one or more charging parameters of the charging unit persists post execution of the determined remedial action therefor. The method further comprises transmitting, by the processor, via the secure connection, event logs of the charging unit to the server in response to generation of the fault signal. The method further comprises communicating, by the server, the event logs of the charging unit to an operator of the charging unit.

In one or more embodiments, the method further establishing, by the processor, the secure connection with the server in response to generation of the error message.

In one or more embodiments, the method further comprises implementing, by the processor, a device agent to send an MQTTS command to an agent broker of the server to open a connection with the server. The method also comprises utilizing, by the processor, a pre-configured encryption key for the server using the opened connection, to establish the secure connection with the server.

In one or more embodiments, the method further comprises processing, by the server, the error message based on reference data in the rules engine to determine an error code corresponding thereto. The method also comprises processing, by the server, the determined error code based on rules dataset in the rules engine to determine the corrective action for the charging unit.

In one or more embodiments, the method further comprises implementing, by the server, one or more of state transition workflows and reference log data for filtering the event logs corresponding to the error message to be processed by the rules engine therein.

In one or more embodiments, the method further comprises analysing, by the server, the event logs for the one or more charging parameters of the charging unit for each of an initialization session, a cable-check session, a charging session, and a stopping session thereof.

The object of the present disclosure is also achieved by a system for automated management of a charging unit for electrical applications according to claim 9. The system comprises a processor associated with the charging unit. The system also comprises a server in secure communication with the processor. The processor is configured to fetch one or more charging parameters of the charging unit; determine a deviation in at least one of the one or more charging parameters of the charging unit by comparing with respective one or more threshold limits therefor; generate an error message indicative of the determined deviation in the at least one of the one or more charging parameters of the charging unit. The server is configured to receive, via the secure connection, the error message; determine a corrective action for the charging unit as defined by a rules engine based on the generated error message; and transmit, via the secure connection, the determined corrective action to the processor. The processor is further configured to execute the determined corrective action for the charging unit.

In one or more embodiments, the processor is further configured to check if the deviation in the at least one of the one or more charging parameters of the charging unit persists, by comparing with the respective one or more threshold limits therefor, post execution of the determined corrective action therefor; fetch event logs of the charging unit in case of the deviation in the at least one of the one or more charging parameters of the charging unit persists post execution of the determined corrective action therefor. The server is further configured to receive, via the secure connection, the event logs of the charging unit; analyse the event logs of the charging unit; determine a remedial action for the charging unit as defined by the rules engine based on the analysis of the event logs; transmit, via the secure connection, the determined remedial action to the processor. The processor is further configured to execute the determined remedial action for the charging unit.

In one or more embodiments, the processor is further configured to check if the deviation in the at least one of the one or more charging parameters of the charging unit persists, by comparing with the respective one or more threshold limits therefor, post execution of the determined remedial action therefor; generate a fault signal indicative of a fault in the charging unit in case of the deviation in the at least one of the one or more charging parameters of the charging unit persists post execution of the determined remedial action therefor; transmit, via the secure connection, event logs of the charging unit to the server in response to generation of the fault signal. The server is further configured to communicate the event logs of the charging unit to an operator of the charging unit.

In one or more embodiments, the processor is further configured to establish a secure connection with the server in response to generation of the error message.

In one or more embodiments, the processor is further configured to implement a device agent to send an MQTTS command to an agent broker of the server to open a connection with the server; and utilize a pre-configured encryption key for the server using the opened connection, to establish the secure connection with the server.

In one or more embodiments, the server is further configured to process the error message based on reference data in the rules engine to determine an error code corresponding thereto; and process the determined error code based on rules dataset in the rules engine to determine the corrective action for the charging unit.

The object of the present disclosure is further achieved by a computer-program product according to claim 15, the computer-program product having machine-readable instructions stored therein, that when executed by a processor, cause the processor to perform steps of the method described above.

The object of the present disclosure is further achieved by a computer readable medium on which program code sections of a computer program are saved, the program code sections being loadable into and/or executable in a system to make the system execute the method steps as described above when the program code sections are executed in the system.

Still other aspects, features, and advantages of the invention are readily apparent from the following detailed description, simply by illustrating a number of particular embodiments and implementations, including the best mode contemplated for carrying out the invention.

A more complete appreciation of the present disclosure and many of the attendant aspects thereof will be readily obtained as the same becomes better understood by reference to the following description when considered in connection with the accompanying drawings:
- FIG 1: is a block diagram representation of a system for automated management of a charging unit for electrical applications, in accordance with one or more embodiments of the present disclosure;
- FIG 2A: is a flowchart representation of a computer-implemented method for automated management of a charging unit for electrical applications, in accordance with one or more embodiments of the present disclosure;
- FIG 2B: is a flowchart representation of continuation of the method of FIG 2A for automated management of the charging unit for electrical applications, in accordance with one or more embodiments of the present disclosure;
- FIG 2C: is a flowchart representation of continuation of the method of FIG 2B for automated management of the charging unit for electrical applications, in accordance with one or more embodiments of the present disclosure;
- FIG 3: is a schematic representation of an architecture for establishing a secure connection between a processor associated with the charging unit and a server, in accordance with one or more embodiments of the present disclosure;
- FIG 4: is a schematic representation of an architecture for implementation of a rules engine by the server, in accordance with one or more embodiments of the present disclosure;
- FIG 5: is a schematic representation of a process flow for fetching event logs of the charging unit, in accordance with one or more embodiments of the present disclosure;
- FIG 6: is a schematic representation of an architecture for analysing event logs of the charging unit, in accordance with one or more embodiments of the present disclosure; and
- FIG 7: is a schematic representation of a workflow for implementation of the steps of the method of FIGS 2A-2C for automated management of a charging unit for electrical applications, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for automated management of a charging unit for electrical applications are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

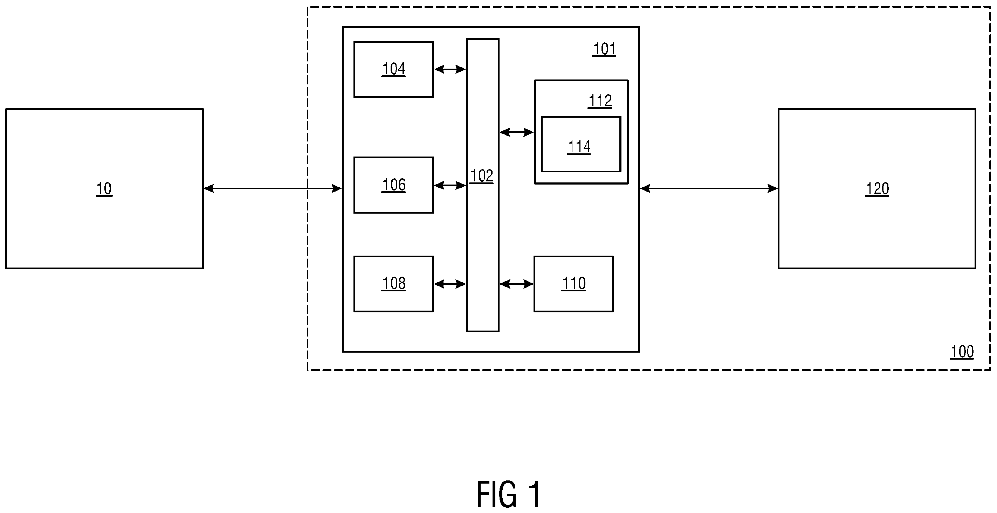

Referring to FIG 1, illustrated is a block diagram of a system 100 for automated management of a charging unit (illustrated as a block and referred by reference numeral 10) for electrical applications, in accordance with one or more embodiments of the present disclosure. As used herein, the automated management of the charging unit 10 involves proactive maintenance to monitor the performance and condition of the charging unit 10 in near real-time. For purposes of the present disclosure, the charging unit 10 is a charging device for electric vehicles (EVs), also known as an Electric Vehicle Supply Equipment (EVSE), that allows to charge plug-in EVs (including electric cars, electric trucks, electric buses, and plug-in hybrids). The charging unit 10 connects the EV to a power source and communicates with it to ensure safe and efficient charging. The charging unit 10 may be classified into different levels based on their power output and charging speed. Charging units are complex pieces of equipment that require regular maintenance to ensure they function properly and efficiently. It may be appreciated that, although in the present disclosure the charging unit 10 has been described in terms of a charging device for EVs, the teachings of the present disclosure may be applicable for use of the charging unit 10 for any suitable type of electrical applications (equipment).

It may be appreciated that the system 100 described herein for automated management of the charging unit 10 may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 100 may be embodied as a computer-program product 100 programmed for performing the said purpose. The system 100 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip.

As illustrated in FIG 1, the system 100 includes a computing device 101 associated with the charging unit 10 for automated management thereof. In an example, the computing device 101 may form part of the charging unit 10 itself. In another example, the computing device 101 may be a separate hardware located on-site of the charging unit 10, and disposed in communication with control systems of the charging unit 10. In still another example, the computing device 101 of the system 100 may be associated with multiple charging units 10, as part of a charging station, and may be responsible for automated management of each one of the said charging units 10 without any limitations.

The computing device 101 includes a communication mechanism such as a bus 102 for passing information among the components of the system 100. The system 100 includes a processor 104 and a memory 106. Generally, the memory 106 is communicatively coupled to the processor 104.

In an example, the memory 106 may be embodied as a computer readable medium on which program code sections of a computer program are saved, the program code sections being loadable into and/or executable in the processor 104 to make the system 100 execute the steps for performing the said purpose. Generally, as used herein, the term "processor" refers to a computational element that is operable to respond to and processes instructions that drive the computing device 101. Optionally, the processor 104 includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Further, herein, the memory 106 may be volatile memory and/or non-volatile memory. The memory 106 may be coupled for communication with the processor 104. The processor 104 may execute instructions and/or code stored in the memory 106. A variety of computer-readable storage media may be stored in and accessed from the memory 106. The memory 106 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 104 has connectivity to the bus 102 to execute instructions and process information stored in the memory 106. The processor 104 may include one or more processing cores with each core configured to perform independently. A multi-core processor enables multiprocessing within a single physical package. Examples of a multi-core processor include two, four, eight, or greater numbers of processing cores. Alternatively, or in addition, the processor 104 may include one or more microprocessors configured in tandem via the bus 102 to enable independent execution of instructions, pipelining, and multithreading. The processor 104 may also be accompanied with one or more specialized components to perform certain processing functions and tasks such as one or more digital signal processors (DSP), and/or one or more application-specific integrated circuits (ASIC) (as represented by reference numeral 108). The DSP 108 may be configured to process real-world signals (e.g., sound) in near real time independently of the processor 104. Similarly, the ASIC 108 may be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The computing device 101 also includes a database 110. As used herein, the database 110 is an organized collection of structured data, typically stored in a computer system and designed to be easily accessed, managed, and updated. The database 110 may be in form of a central repository of information that can be queried, analysed, and processed to support various applications and business processes. In the computing device 101, the database 110 provides mechanisms for storing, retrieving, updating, and deleting data, and typically includes features such as data validation, security, backup and recovery, and data modelling.

The computing device 101 further includes a module arrangement 112 for storing executable instructions that when executed, enables the processor 104 to control operations of the charging unit 10. In particular, the module arrangement 112 includes a control module 114 for storing executable instructions that when executed, enables the processor 104 to perform the method steps described hereinafter for automated management of the charging unit 10 for electrical applications. Also, in the computing device 101, the memory 106 may be configured to store the data associated with or generated by the execution of the inventive steps.

Further, as illustrated, the system 100 includes a server 120. The server 120 is disposed in signal communication with the computing device 101. Herein, the 'server' refers to a structure and/or module that includes programmable and/or non-programmable components configured to store, process and/or share information and/or signals for managing the charging unit 10 with the computing device 101. The server 120 may include any arrangement of physical or virtual computational entities capable of enhancing information to perform various computational tasks. In the present examples, the server 120 may include components such as memory, a processor, a network adapter and the like, to store, process and/or share information with other computing components, such as a client device, a remote server unit, a remote gateway, a network, or a database. Further, it will be appreciated that the server 120 may be implemented as a hardware server and/or plurality of hardware servers operating in a parallel or in a distributed architecture. Optionally, the server 120 is supplemented with additional computation system, such as neural networks, and hierarchical clusters of pseudo-analog variable state machines implementing artificial intelligence algorithms.

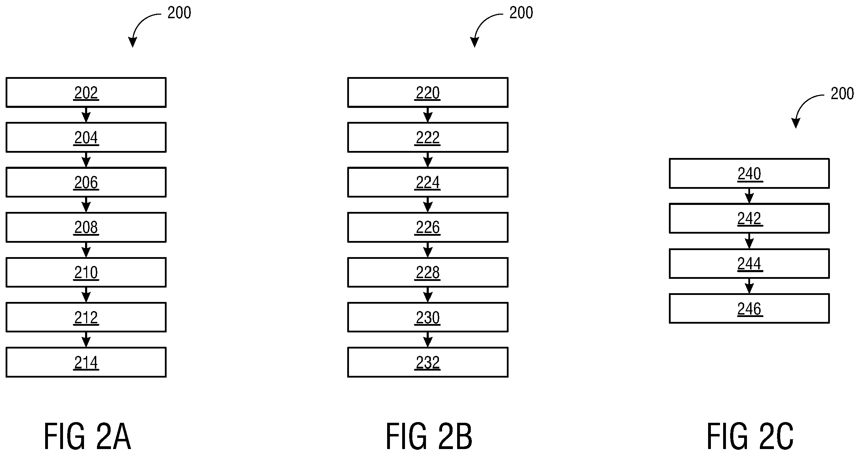

Referring to FIG 2A, illustrated is a flowchart of a method (as represented by reference numeral 200) for automated management of the charging unit 10 for electrical applications, as per embodiments of the present disclosure. It may be appreciated that the various steps of the method 200 as described hereinafter may be executed in the system 100, or specifically in the processor 104 of the system 100, for automated management of the charging unit 10 for electrical applications.

At step 202, the method 200 includes fetching, by the processor 104, one or more charging parameters of the charging unit 10. Herein, the charging parameters may include voltage, current, power, temperature, state of charge (SoC), and other relevant parameters that are important to the charging process. The processor 104 may utilize various sensors to fetch the charging parameters of the charging unit 10. For instance, a voltage sensor may be used to measure the voltage of the charging unit 10, while a current sensor may be used to measure the current flowing into the charging unit 10. These measurements may, in turn, be used to calculate the power being supplied by the charging unit 10. Additionally, a temperature sensor may be used to monitor the temperature of the charging unit 10, as temperature may have a significant impact on the charging process. The SoC of the charging unit 10 may also be measured using a SoC sensor or algorithm, which may provide information about the level of charge available in a battery associated with charging unit 10 and help determine when the charging process should be stopped. It may be contemplated that such sensors used to fetch the charging parameters may be connected to the charging unit 10 or may be wireless sensors that communicate with the processor 104.

At step 204, the method 200 includes determining, by the processor 104, a deviation in at least one of the one or more charging parameters of the charging unit 10 by comparing with respective one or more threshold limits therefor. That is, the process of determining a deviation in one or more charging parameters of the charging unit 10 involves analysing the data related to the charging process and comparing it with the respective threshold limits set for each parameter. As discussed, the charging parameters may include voltage, current, power, temperature, state of charge (SoC), and other relevant parameters that are important to the charging process. Each parameter has a specific threshold limit, which is a predefined value set by the charging unit 10 or station manufacturer. Herein, the processor 104 constantly monitors the charging parameters during the charging process and compares the values with the respective threshold limits. If the value of any parameter exceeds or falls below the threshold limit, the processor 104 identifies this as a deviation. For example, if the voltage exceeds the maximum threshold limit during the charging process, the processor 104 may identify this as a deviation. Similarly, if temperature of a battery pack rises above the recommended limit, the processor 104 may identify this as a deviation. It may be appreciated that such analysis of the charging parameters and comparison with the threshold limits is critical to ensure safe and efficient operation of the charging unit 10.

At step 206, the method 200 includes generating, by the processor 104, an error message indicative of the determined deviation in the at least one of the one or more charging parameters of the charging unit 10. That is, when the processor 104 associated with the charging unit 10 determines a deviation (as described in the preceding paragraph) in one or more charging parameters of the charging unit 10, the processor 104 generates an error message. The error message is a notification that there is a problem with the charging process, and it indicates the nature of the deviation. The error message may include details about the deviation, such as the parameter that has exceeded or fallen below the threshold limit, the value of the parameter, and the time when the deviation occurred.

In present examples, the error message may be "service error" which indicates that there is an issue with the charging service, such as a connection problem or a software malfunction. In another example, the error message may be "SECC error" which indicates some issue in communication between the charging unit 10 and the electric vehicle. In another example, the error message may be "Temp error" which indicates that temperature of the charging unit 10 has exceeded the recommended limit. In another example, the error message may be "Config error" which indicates that the configuration settings for the charging unit 10 are incorrect. In another example, the error message may be "Emergency button error" which indicates that emergency button of the charging unit 10 has been activated. In another example, the error message may be "Door open error" which indicates that the door of the charging unit 10 has been left open. In another example, the error message may be "Component failure error" which indicates that there is an issue with one or more components of the charging unit 10. In another example, the error message may be "Surge prot error" which indicates that there is an issue with the surge protection mechanism of the charging unit 10. In another example, the error message may be "Max cable cycle error" which indicates that the cable of the charging unit 10 has reached its maximum cycle limit. In another example, the error message may be "Power Converter error" which indicates that there is an issue with the power converter of the charging unit 10.

At step 208, the method 200 includes receiving, by the server 120, in secure connection with the processor 104, the error message. That is, when the processor 104 associated with the charging unit 10 generates an error message indicating a deviation in one or more charging parameters, the error message is transmitted to the server 120 in a secure connection therewith. The secure connection between the processor 104 and the server 120 ensures that the error message is transmitted securely and cannot be intercepted or manipulated by unauthorized parties. This ensures that information related to the charging unit 10 is secure and the data related to the charging process is protected from unauthorized access or tampering.

In one or more embodiments, the method 200 includes establishing, by the processor 104, the secure connection with the server 120 in response to generation of the error message. As discussed, the processor 104 is disposed in signal communication with the server 120. That is, the processor 104 associated with charging unit 10 may already have an open connection with the server 120 before the generation of the error message. In such cases, the processor 104 of the charging unit 10 may establish a secure connection with the server 120 in response to the generation of the error message. Herein, to establish a secure connection with the server 120, the processor 104 may use a variety of protocols and technologies, such as Transport Layer Security (TLS), Secure Sockets Layer (SSL), or Virtual Private Network (VPN). These protocols ensure that the data transmitted between the processor 104 and the server 120 is encrypted and cannot be intercepted or manipulated by unauthorized parties.

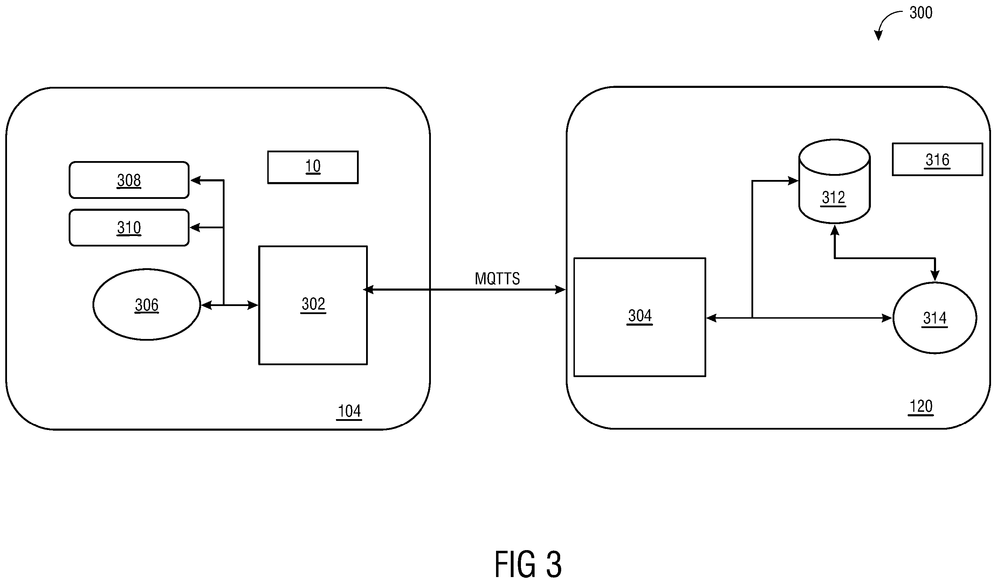

FIG 3 is a schematic representation of an architecture (as represented by reference numeral 300) for establishing a secure connection between a processor 104 associated with the charging unit 10 and a server 120, in accordance with one or more embodiments of the present disclosure. In present embodiments, the method 200 includes implementing, by the processor 104, a device agent 302 to send an MQTTS command to an agent broker 304 of the server 120 to open a connection with the server 120; and utilizing, by the processor 104, a pre-configured encryption key for the server 120 using the opened connection, to establish the secure connection with the server 120. The processor 104 may implement an SSH (Secure Shell) server (referred by reference numeral 306) for this purpose. Herein, the device agent 302 of the processor 104 has a communication line with the server 120, and the agent broker 304 of the server 120 has a communication line with the processor 104. As illustrated, he device agent 302 may be disposed in connection with charger apps (referred by reference numeral 308) and charger components (referred by reference numeral 310) of the charging unit 10. Further, the agent broker 304 of the server 120 may be disposed in connection with a database (referred by reference numeral 312) for storing logs and events (as discussed later in more detail) and an automated system (referred by reference numeral 314) for processing in the server 120, which in turn, may be implemented in a cloud computing device (referred by reference numeral 316).

Herein, the device agent 302 is responsible for initiating communication between the processor 104 and the server 120. The device agent 302 sends an MQTTS (Message Queuing Telemetry Transport Security) command to the agent broker 304 of the server 120 to open a connection with the server 120. MQTTS is a secure protocol designed for loT (Internet of Things) devices that require low bandwidth and low power consumption. MQTTS uses SSL/TLS encryption to secure communication between the processor 104 and the server 120. By using MQTTS, the processor 104 may establish a secure connection with the server 120 without consuming excessive power or bandwidth. In present examples, the agent broker 304 of the processor 104 may be configured to only accept SSH connections from the agent broker 304 of the server 120. Once the connection is established, the processor 104 of the charging unit 10 utilizes a pre-configured encryption key for the server 120 to secure the connection. The encryption key is a pre-shared secret key that is used to encrypt and decrypt data transmitted between the charging unit 10 and the server 120. The pre-configured key is a secure cryptographic key that is used to establish a secure connection between the processor 104 and server 120. This key is generated and exchanged during the onboarding process, which is the process of setting up the charging unit 10 for use with the server 120.

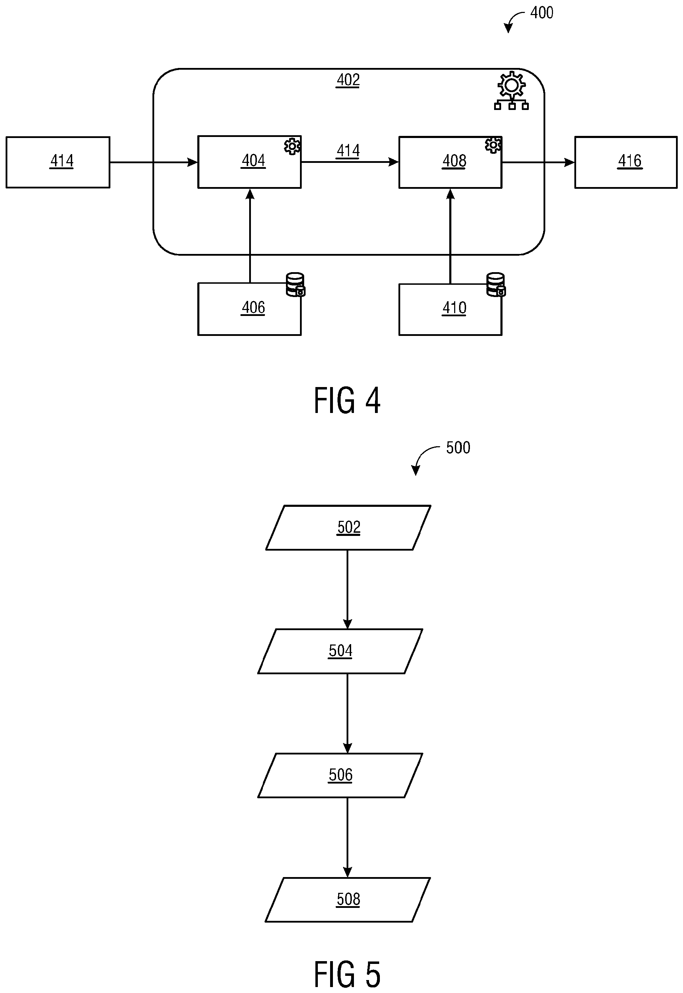

At step 210, the method 200 includes determining, by the server 120, a corrective action for the charging unit 10 as defined by a rules engine based on the generated error message. FIG 4 is a schematic representation of an architecture (as represented by reference numeral 400) for implementation of a rules engine 402 by the server 120, in accordance with one or more embodiments of the present disclosure. Herein, the rules engine 402 is a software component, implemented in the server 120, that executes a set of rules to determine the appropriate actions to take in response to a specific error message (referred by reference numeral 412). The rules engine 402 includes a message analyser 404 which is responsible for parsing the error message and comparing it to reference data 406 in order to determine the appropriate error code. This reference data 406 typically includes information about expected charging parameters, expected system behaviour, and other relevant information for the charging unit 10. By comparing the error message to this reference data 406, the message analyser 404 may determine the root cause of the error and generate an appropriate error code (referred by reference numeral 414). It may be appreciated that the rules engine 402, as used herein, can be adopted to support future scenarios and use cases. For example, the rules engine 402 could be designed to support interoperability between different original equipment manufacturer (OEM) chargers, enabling parallel charging of multiple EVs. This could help to reduce wait times for charging and improve the overall efficiency of the charging infrastructure.

Once the error code 414 has been generated, it is sent to a command analyser 408. The command analyser 408 is responsible for generating a desired action command (referred by reference numeral 416) based on a set of predefined rules. These rules are typically defined in a rules dataset 410 and are based on the specific error code generated by the message analyser 404. For example, if the error code 414 indicates a temperature error, the rules dataset 410 might specify that the charging process should be stopped until the temperature falls below a certain threshold. This way the server 120 may use the rules engine 402 to determine the appropriate corrective action for the charging unit 10 based on the error message 412 as received. In some examples, the rules engine 402 may further take into account factors such as the severity of the error, the current state of the charging unit 10, and any other relevant contextual information.

At step 212, the method 200 includes transmitting, by the server 120, via the secure connection, the determined corrective action to the processor 104. That is, once the corrective action has been determined, the server 120 may send a command to the processor 104 to implement the action and resolve the error for the charging unit 10. This is done by transmitting the corrective action via the established secure connection between the server 120 and the processor 104. By leveraging the secured connection and other measures, it is ensured that corrective actions are taken in a timely and effective manner, minimizing downtime and maximizing the efficiency of the charging unit 10. This way the server 120 is responsible for receiving and processing the error message, as well as providing support for the charging unit 10 and ensuring the integrity and security of the charging process.

At step 214, the method 200 includes executing, by the processor 104, the determined corrective action for the charging unit 10. Herein, the processor 104 is configured to execute the determined corrective action for the charging unit 10. In particular, the processor 104 is configured to execute the corrective action as defined by the rules engine 402 based on the error message received from the charging unit 10. This could involve stopping the charging process, restarting the charger, replacing a component, notifying the user of an issue, or taking any other action necessary to correct the deviation in the charging parameter.

In an example, for the "Service error" (as described), the corrective action may be to restart the charging service of the charging unit 10. In another example, for the "SECC error" (as described), the corrective action may be to reboot the charging unit 10. In another example, for the "Temp error" (as described), the corrective action may be to stop charging until the temperature of the charging unit 10 is below the set limit. In another example, for the "Config Error" (as described), the corrective action may be to correct the configuration as defined in the rule data set. In another example, for the "Emergency button error" (as described), the corrective action may be to notify the user to manually turn off the emergency button. In another example, for the "Door open error" (as described), the corrective action may be to notify the user to close the door. In another example, for the "Component failure error" (as described), the corrective action may be to notify the user about the component failure. In another example, for the "Surge prot error" (as described), the corrective action may be to notify the user about the surge protection error and manually verify the components. In another example, for the "Max cable cycle error" (as described), the corrective action may be to notify the user to replace the charging cable. In another example, for the "Power Converter error" (as described), the corrective action may be to notify the user to replace the power modules.

The method 200 described in the preceding paragraphs focuses on the initial detection and correction of deviations in charging parameters. Sometimes there is a need to provide an additional layer of monitoring and remediation in case the corrective action taken does not fully resolve the deviation in the charging parameters of the charging unit; i.e., to provide a more comprehensive approach by checking if the deviation still persists after the initial corrective action has been taken.

Referring to FIG 2B, illustrated is a flowchart representation of continuation of the method 200 for automated management of the charging unit 10 for electrical applications, in accordance with one or more embodiments of the present disclosure. Herein, at step 220, the method 200 further includes checking, by the processor 104, if the deviation in the at least one of the one or more charging parameters of the charging unit 10 persists, by comparing with the respective one or more threshold limits therefor, post execution of the determined corrective action therefor. That is, after the processor 104 has executed the corrective action for the determined deviation in one or more charging parameters of the charging unit 10, the processor 104 may continue to monitor the said charging parameters to ensure that the deviation has been corrected. To do this, the processor 104 may keep comparing, in near real-time, the current charging parameter values with the respective threshold limits. For example, if the corrective action taken was to reduce the charging current due to high temperature, the processor 104 will continue to monitor the temperature of the charging unit 10. If the temperature decreases to a safe level, the processor 104 will compare the current temperature value with the threshold limit for temperature. If the current temperature value is within the acceptable range, the deviation in the temperature parameter has been corrected. However, if the temperature is still above the threshold limit, the processor 104 may determine that further action is needed.

At step 222, the method 200 further includes fetching, by the processor, event logs of the charging unit 10 in case of the deviation in the at least one of the one or more charging parameters of the charging unit 10 persists post execution of the determined corrective action therefor. The event logs can provide valuable information for diagnostics and troubleshooting. If the charging unit 10 experiences a fault or error during charging, the event log can provide detailed information about the issue, such as the time of occurrence, the specific parameter values at the time of the fault, and any corrective actions taken by the processor. This information can help technicians diagnose and resolve issues with the charging unit 10 more quickly and accurately. Herein, the event logs may include data on performance of the charging unit 10, such as the charging rate, voltage, and current, as well as any errors or warnings generated during the charging process.

FIG 5 is a schematic representation of a process flow (as represented by reference numeral 500) for fetching event logs of the charging unit 10. In general, the charging process for the charging unit 10 involves four major sessions, including an initialization session (referred by reference numeral 502), a cable-check session (referred by reference numeral 504), a charging session (referred by reference numeral 506), and a stopping session (referred by reference numeral 508). Each session involves specific activities that are verified and validated to ensure a successful charging process. Herein, during the "Initialization" session 502, the charging unit 10 verifies the control pilot state, which signals the start of the charging process. Authentication is also performed to verify identity of the charging unit 10, and charge parameters are configured to ensure the charging process is optimal. Finally, the control pilot state is verified to mark the end of the initialization session 502. The "Cable Check" session 504 involves verifying the charging cable's status. The charging unit 10 initializes the cable check process, and the current and voltage setpoints are configured to the desired values. The breaker command is executed to initiate the cable check process, and upon successful completion, the cable check phase ends. The "Charging" session 506 involves the actual transfer of energy from the charging unit 10 to the electric vehicle. The charging session 506 is initiated, and the pre-charger is activated to ensure the voltage level is stable. Charger parameters are exchanged between the charging unit 10 and the electric vehicle to establish optimal charging conditions. Finally, the energy transfer process begins, ensuring the electric vehicle is charged to the desired level. The "Stopping" session 508 involves stopping the energy transfer process. The stop charging process is initiated, and the energy transfer is stopped. The control pilot state is changed to signal the end of the charging process. Finally, the stop charging process ends.

At step 224, the method 200 further includes receiving, by the server 120, in secure connection with the processor 104, the event logs of the charging unit 10. Herein, the process of receiving event logs involves establishing the secure connection (as described in the preceding paragraphs) between the processor 104 associated with the charging unit 10 and the server 120, such as through a virtual private network (VPN) or other secure connection method. Once the connection is established, the processor 104 can send the event logs of the charging unit 10 to the server 120 in a structured format, such as a file or database entry.

At step 226, the method 200 further includes analysing, by the server 120, the event logs of the charging unit 10. In particular, the method 200 includes analysing, by the server 120, the event logs for the one or more charging parameters of the charging unit 10 for each of the initialization session, the cable-check session, the charging session, and the stopping session thereof. That is, herein, the log analysis is used to parse and analyse event logs to detect any errors in each of the said sessions of the process flow 500 (as described) and ensure the charging session is optimal. The server 120 may use various techniques to analyse the event logs of the charging unit 10. In an example, to analyse the event logs, the server 120 may use statistical methods to identify patterns and trends in the data. For example, the server 120 may use regression analysis to identify any correlations between the charging parameters and performance of the charging unit 10. The server 120 may also use time series analysis to identify any patterns or trends in the data over time. Additionally, or alternatively, the server 120 may use machine learning techniques to analyse the event logs. The machine learning model may be trained using historical data on performance of the charging unit 10 and any instances of decrease in the performance in the past. The model may then be used to predict the likelihood of a deviation occurring in the future. In some examples, in addition to analysing the event logs, the processor 104 may also use data from other sources to improve the accuracy of its analysis. For example, the processor 104 may use weather data to predict the impact of temperature and humidity on performance of the charging unit 10. The processor 104 may also use data from other sensors, such as current sensors or voltage sensors, to monitor the charging process in near real-time and to identify any deviations from the expected performance.

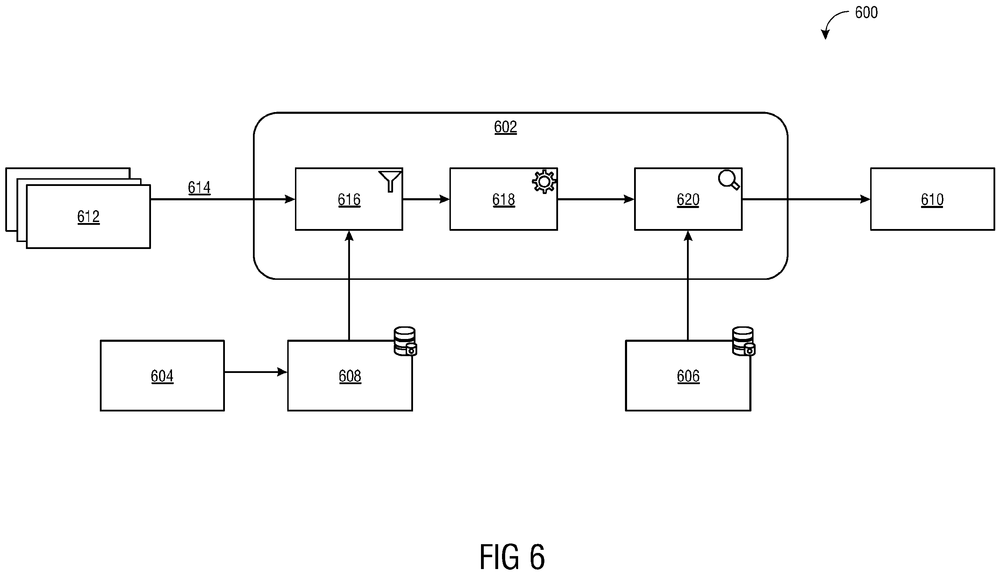

FIG 6 is a schematic representation of an architecture (as represented by reference numeral 600) for analysing event logs of the charging unit 10, in accordance with one or more embodiments of the present disclosure. In present embodiments, to ensure the charging process (as described above) is successful, a log analyser 602 is incorporated in the server 120 to parse and analyse logs to detect any errors in any of the sessions 502, 504, 506, 508, and thereby ensure the charging process is optimal. The log analyser 602 is based on state transition workflows 604, reference log data 606 and filtering criteria 608 (as discussed later in more detail). The log analyser 602 may be implemented as a software module or service that runs on the processor 104 of the charging unit 10. Such module is responsible for analysing logs generated by the charging unit 10 during a charging process. In an example, the log analyser 602 may employ a transition-based approach, which analyses logs to identify transition points between states. The log analyser 602 may verify whether each state transition occurred successfully and detects any errors that might have occurred. If an error is detected, the log analyser 602 generates an error message (referred by reference numeral 610). The log analyser 602 also maintains a database of past errors for reference.

In present embodiments, the method 200 includes implementing, by the server 120, one or more of the state transition workflows 604 and the reference log data 606 for filtering the event logs corresponding to the error message. In particular, as shown in FIG 6, log sources (referred by reference numeral 612) are implemented to provide log data (referred by reference numeral 614) to the log analyser 602. The log data 614 contain critical information about the charging session, including the charging state, any errors encountered, and the corresponding error messages. The log data 614 may be stored in a specific directory or file system, and the log analyser 602 reads the log data 614 periodically to detect any errors.

In particular, the log data 614, from the log sources 612, which may be services associated with the charging unit 10, is received at a logs clean-up service 616 of the log analyser 602. To avoid false positives and ensure accuracy, the logs clean-up service 616 may implement the state transition workflows 604 and the filtering criteria 608 to apply various filtering techniques to the log data 614. These filters may include ignoring log data 614 that do not match a specific pattern or that are too old to be relevant. This way the log analyser 602 may filter out junk or malicious logs that may be injected into the system by attackers and may only allow logs of interest to pass through for analysis, and any malicious or junk logs are blocked. Thereafter, a log parser 618 of the log analyser 602 uses the filtered log data 614 to identify any errors that occurred during the charging process. The log parser 618 scans recent log data for errors, with reference to the state transition workflows 604 and the filtering criteria 608. The log parser 618 may use pattern recognition algorithms to analyse the log data 614 and detect errors. These algorithms typically rely on regular expressions or keyword matching to identify patterns in the log data 614 that indicate an error. Further, a log scanner 620 of the log analyser 602 may look for specific error codes or messages in the log data 614 that indicate a problem with the charging process using the reference log data 606, and generates the error message 610.

At step 228, the method 200 further includes determining, by the server 120, a remedial action for the charging unit 10 as defined by the rules engine 402 based on the analysis of the event logs. The process of determining the remedial action for the charging unit 10 utilizing the rules engine 402 is similar to that of determining the corrective action for the charging unit 10 utilizing the rules engine 402 as described above in reference to the architecture 400 of FIG 4, and thus not repeated herein for brevity of the present disclosure. Herein, the server 120 may detect that the charging unit 10 is experiencing frequent temperature spikes during charging, indicating that the battery may be overheating. The server 120 may then recommend the remedial action which provides that the charging unit 10 be adjusted to reduce the charging current or increase the cooling rate to prevent damage to the battery.

At step 230, the method 200 further includes transmitting, by the server 120, via the secure connection, the determined remedial action to the processor 104. At step 232, the method 200 also includes executing, by the processor 104, the determined remedial action for the charging unit 10. That is, after the server 120 has determined a remedial action for the charging unit 10 based on the analysis of the event logs, it transmits the determined remedial action to the processor 104 via a secure connection. The processor 104 then receives the remedial action from the server 120 and executes it on the charging unit 10. The executed remedial action may be one or more automated procedures that aim to address the underlying issue causing the deviation in the charging parameters. For example, if the charging unit 10 is not charging the electrical device properly due to a malfunctioning component, the processor 104 may execute a remedial action to repair or replace the faulty component. The execution of the determined remedial action may involve adjusting the charging parameters, resetting the charging unit 10, or initiating a maintenance action on the charging unit 10. The processor 104 may also log the remedial action taken to address the deviation in the charging parameters and generate an event log of the executed remedial action. This event log can be used for future reference and analysis to improve the performance of the charging unit 10.

Despite the execution of the remedial action, it is possible for the charging unit 10 to continue to deviate from the desired charging parameters. This can be due to a variety of reasons such as hardware malfunction, environmental factors, or user error. In order to ensure that the charging unit 10 operates optimally, it is important to monitor its performance after the remedial action has been executed.

Referring to FIG 2C, illustrated is a flowchart representation of continuation of the method 200 for automated management of the charging unit 10 for electrical applications, in accordance with one or more embodiments of the present disclosure. Herein, at step 240, the method 200 further includes checking, by the processor 104, if the deviation in the at least one of the one or more charging parameters of the charging unit 10 persists, by comparing with the respective one or more threshold limits therefor, post execution of the determined remedial action therefor. This step involves comparing the current charging parameters of the charging unit 10 with the respective threshold limits. The processor 104 uses this check to ensure that the remedial action has indeed addressed the issue causing the deviation in the charging parameters.

At step 242, the method 200 further includes generating, by the processor 104, a fault signal indicative of a fault in the charging unit 10 in case of the deviation in the at least one of the one or more charging parameters of the charging unit 10 persists post execution of the determined remedial action therefor. That is, in case the deviation in the charging parameters persists post-execution of the remedial action, the processor 104 generates a fault signal. This fault signal is indicative of a fault in the charging unit 10 and is generated to alert the server 120 that the charging unit 10 is still not functioning properly. The fault signal may also include information about the nature and severity of the fault.

At step 244, the method 200 further includes transmitting, by the processor 104, via the secure connection, event logs of the charging unit 10 to the server 120 in response to generation of the fault signal. That is, upon generation of the fault signal, the processor 104 transmits the event logs of the charging unit 10 to the server 120 via the secure connection. These event logs may include details about the charging parameters, the executed remedial action, and any error messages generated during the process. The event logs are used by the server 120 to analyse the issue and determine the next course of action.

At step 246, the method 200 further includes communicating, by the server 120, the event logs of the charging unit 10 to an operator of the charging unit 10. That is, if there is a fault in the charging unit 10 that persists despite remedial actions, the operator needs to be informed so that they can take appropriate action to resolve the issue. The communication may occur through various means, such as email, messaging, or notification on a web-based dashboard. The event logs of the charging unit 10 contain valuable information about the fault and its history, which can help the operator to diagnose and fix the issue quickly and efficiently. For instance, the event logs of the charging unit 10 can provide detailed information about the issue, such as the time of occurrence, the specific parameter values at the time of the fault, and any corrective actions taken by the processor 104. In addition, communication with the operator can help to ensure that they are aware of any ongoing issues with the charging unit 10, and can take preventive measures to avoid similar faults in the future.

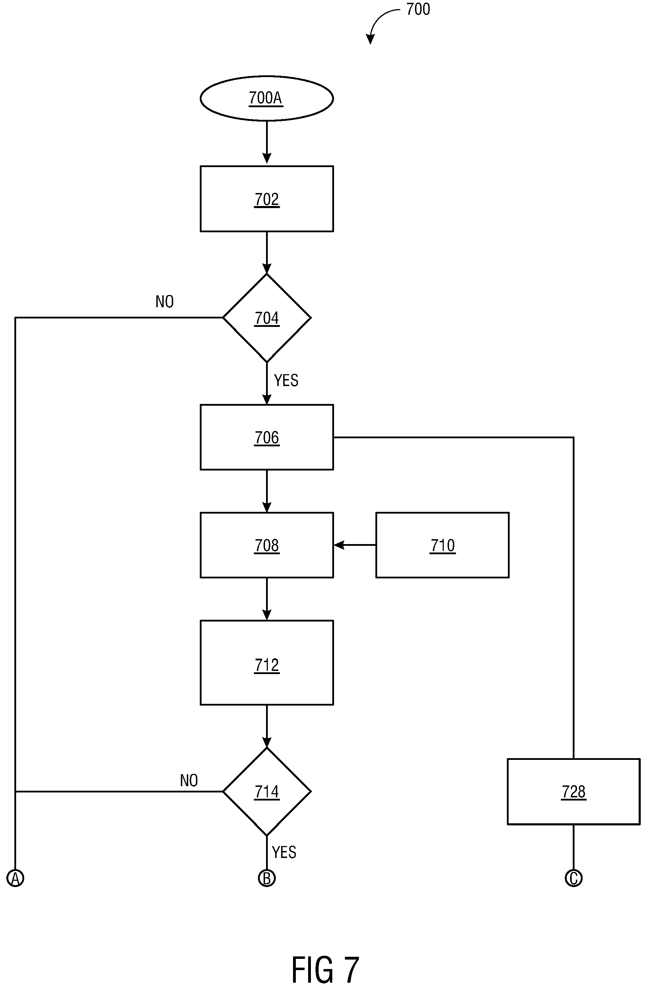

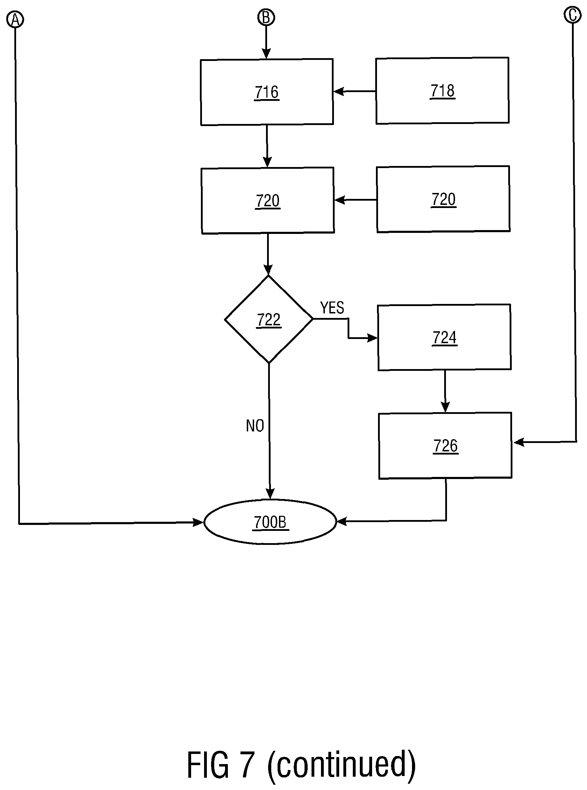

Now referring to FIG 7, illustrated is a schematic representation of a workflow (as represented by reference numeral 700) for implementation of the steps of the method 200 for automated management of the charging unit 10 for electrical applications, in accordance with one or more embodiments of the present disclosure. As illustrated, the workflow 700 starts at step 700A. The workflow 700 involves, at step 702, monitoring charging parameters of the charging unit 10, like health status. At step 704, the workflow 700 involves determining if there is a deviation in at least one of the one or more charging parameters of the charging unit 10 as compared with respective one or more threshold limits therefor. At step 706, the workflow 700 involves connecting to the server 120 using secure connection, if any error occurs. At steps 708-712, the workflow 700 involves analysing information about all charger application and services status, if not in desired state, and take corrective action as defined by rules engine (such as, the rules engine 402), as described in the method 200 in reference to flowchart of FIG 2A. Further, at step 714, the workflow 700 involves determining if the deviation in the at least one of the one or more charging parameters of the charging unit 10 persists, by comparing with the respective one or more threshold limits therefor, post execution of the determined corrective action therefor. At steps 716-720, the workflow 700 involves fixing the issue based on remedial action as defined by the rules engine 402 if the fault persists based on analysis of the event logs, as described in the method 200 in reference to flowchart of FIG 2B. Further, at step 722, the workflow 700 involves checking if the deviation in the at least one of the one or more charging parameters of the charging unit 10 persists, by comparing with the respective one or more threshold limits therefor, post execution of the determined remedial action therefor. At steps 724-726, the workflow 700 involves getting all hardware component status and logs and notifying the user and/or operator of the charging unit 10 if the fault persists, as described in the method 200 in reference to flowchart of FIG 2C.

Further, as illustrated in FIG 7, in certain cases, it may be beneficial to consider event logs of the charging unit 10 at the first place itself instead of waiting for a deviation in charging parameters. For example, if the charging unit 10 has a history of malfunctioning or if it has undergone repairs or maintenance recently, it may be prudent to analyse the event logs of the charging unit 10 to ensure that it is functioning properly. Such proactive analysing of the event logs can help detect any potential issues early on and take corrective or remedial action before any major problems arise. Additionally, proactive analysis of the event logs can help identify patterns or trends in behaviour of the charging unit 10 that may not be apparent from monitoring charging parameters alone. This can help optimize the performance of the charging unit 10 and prevent any issues from recurring in the future.

In such scenario, at step 728, the workflow 700 may prioritize analysing the event logs first to identify any deviations in the charging parameters of the charging unit 10. This would help to detect any issues at an early stage and take remedial action before they escalate into larger problems. The process would involve transmitting the event logs to the server 120 for analysis and then directly notifying the operator of the charging unit 10 for possible issues therewith, based on the analysis. The process may also involve recommending the corrective action and/or the remedial action to correct the deviation in the charging parameters to the operator for reference thereof. The workflow 700 ends at step 700B.

The teaching described above in terms of the method 200 for automated management of the charging unit 10 for electrical applications may be applied *mutatis mutandis* to the system 100. In this regard, the system 100 for automated management of the charging unit 10 for electrical applications includes the processor 104 configured to fetch one or more charging parameters of the charging unit 10, determine a deviation in at least one of the one or more charging parameters of the charging unit 10, and generate an error message indicative of the determined deviation. Additionally, the system 100 includes the server 120 in secure connection with the processor 104, where the server 120 is configured to receive the error message, determine a corrective action for the charging unit 10 as defined by a rules engine 402 based on the generated error message, transmit the determined corrective action to the processor 104, and execute the determined corrective action for the charging unit 10.

The system 100 may also implement the further steps, where the processor 104 may be configured to check if the deviation in the charging parameters persists post execution of the determined corrective action, fetch event logs of the charging unit 10 in case of persistence of the deviation, and transmit the event logs to the server 120. In turn, the server 120 may analyse the event logs, determine a remedial action for the charging unit 10 based on the analysis of the event logs, transmit the determined remedial action to the processor 104, and execute the determined remedial action for the charging unit 10.

The system 100 may also implement the further steps, where the processor 104 may be further configured to check if the deviation in the at least one of the one or more charging parameters of the charging unit 10 persists, by comparing with the respective one or more threshold limits therefor, post execution of the determined remedial action therefor; generate a fault signal indicative of a fault in the charging unit 10 in case of the deviation in the at least one of the one or more charging parameters of the charging unit 10 persists post execution of the determined remedial action therefor; and transmit, via the secure connection, event logs of the charging unit 10 to the server 120 in response to generation of the fault signal. In turn, the server 120 may be further configured to communicate the event logs of the charging unit 10 to an operator of the charging unit 10.

In some embodiments, the system 100 may further be configured to improve diagnostics and corrective actions by using Artificial Intelligence (AI) and Machine Learning (ML) techniques. These techniques involve analysing the vast amount of log data generated by the charging infrastructure, identifying patterns and anomalies, and using this information to diagnose faults and take corrective actions. AI-ML algorithms can process large amounts of log data quickly and accurately, identifying patterns that may not be immediately apparent to human operators. By using this data, the system 100 can learn from past faults and improve its performance over time, reducing the risk of future faults and improving the charging infrastructure's overall reliability.

The system 100 and the method 200 described herein have been described in terms of employing both the processor 104 and the server 120 for automated management of the charging unit 10. However, it is important to note that in other embodiments, only one of the two may be employed without any limitations. In such scenarios, the functionality of the non-employed component may be integrated into the employed component, or it may simply not be used at all. For instance, in a scenario where only a processor is employed, the processor may be programmed to perform all the functions that were originally attributed to the server. The processor can fetch one or more charging parameters of the charging unit 10, determine a deviation in at least one of the charging parameters, generate an error message indicative of the determined deviation, and execute a corrective action for the charging unit 10. Additionally, the processor may also check if the deviation in the charging parameters persists, fetch event logs of the charging unit 10, analyse the event logs, determine a remedial action, and execute the remedial action. On the other hand, in a scenario where only a server is employed, the server may be configured to perform all the functions that were originally attributed to the processor. The server can receive the one or more charging parameters of the charging unit 10, determine a deviation in at least one of the charging parameters, generate an error message indicative of the determined deviation, and determine a corrective action for the charging unit 10 based on a rules engine. Additionally, the server may also receive event logs of the charging unit 10, analyse the event logs, determine a remedial action, and transmit the remedial action to the charging unit 10. It is evident that the system 100 and the method 200 described herein can be adapted to various embodiments, with the choice of employing either a processor or a server being based on specific requirements and constraints of the application. The flexibility in the choice of components enables the teachings of the present disclosure to be implemented in a variety of applications with different architectures and configurations.

The system 100 and the method 200 of the present disclosure provide automated management of the charging unit 10, which involves proactive maintenance to monitor the performance and condition of the charging unit 10 in near real-time. This allows for early detection of potential issues and enables timely intervention to prevent downtime or failure. This also allows for a visual trace with set of defined parameters to analyze status of each component of the charging unit 10 and also replay fault scenarios, e.g., one specific bus is not charging, or the like. There are several benefits to implementing automatic proactive maintenance as part of an EV charging infrastructure. Firstly, it helps to minimize downtime of the charging unit 10 by detecting and addressing issues before they result in a failure. This ensures that EV owners can rely on the availability of the charging unit 10 when needed. Secondly, automatic proactive maintenance can help to optimize repair costs by identifying issues early on and allowing for targeted interventions. This can prevent more costly repairs down the line and help to maximize the return on investment for business owners of the charging unit 10. By solving the difficulties of analyzing charging units on scale by using automated monitoring and diagnostics systems, it can save significant time and resources that would otherwise be spent manually analyzing each charging unit 10. This can further reduce the need for on-site service visits, saving travel costs and increasing efficiency. Using secure and automated SSH connection, it can enable remote access and control of the charger from any location, allowing for quick and efficient diagnostics and repairs. In addition to these practical benefits, automatic proactive maintenance also plays an important role in ensuring the longevity and sustainability of EV charging infrastructure. By proactively maintaining charging units, their lifespan can be extended, reducing the need for replacements and minimizing waste. While the present disclosure has been described in detail with reference to certain embodiments,

it should be appreciated that the present disclosure is not limited to those embodiments. The scope of the present disclosure is, therefore, indicated by the following claims rather than by the foregoing description.

**Reference Numerals**

| | |
|---|---|
| charging unit | 10 |
| system | 100 |
| computing device | 101 |
| bus | 102 |
| processor | 104 |
| memory | 106 |
| DSP/ASIC | 108 |
| database | 110 |
| module arrangement | 112 |
| control module | 114 |
| server | 120 |
| method | 200 |
| step | 200 |
| step | 202 |
| step | 204 |
| step | 206 |
| step | 208 |
| step | 210 |
| step | 212 |
| step | 214 |
| step | 220 |
| step | 222 |
| step | 224 |
| step | 226 |
| step | 228 |
| step | 230 |
| step | 232 |
| step | 240 |
| step | 242 |
| step | 244 |
| step | 246 |
| architecture | 300 |
| device agent | 302 |
| agent broker | 304 |
| SSH server | 306 |
| charger apps | 308 |
| charger components | 310 |
| database | 312 |
| automated system | 314 |
| cloud computing device | 316 |
| architecture | 400 |
| rules engine | 402 |
| message analyser | 404 |
| reference data | 406 |
| command analyser | 408 |
| rules dataset | 410 |
| error message | 412 |
| error code | 414 |
| action command | 416 |
| process flow | 500 |
| initialization session | 502 |
| cable-check session | 504 |
| charging session | 506 |
| stopping session | 508 |
| architecture | 600 |
| log analyser | 602 |
| state transition workflows | 604 |
| reference log data | 606 |
| filtering criteria | 608 |
| error message | 610 |
| log sources | 612 |
| log data | 614 |
| logs clean-up service | 616 |
| log parser | 618 |
| log scanner | 620 |
| workflow | 700 |
| step | 700A |
| step | 702 |
| step | 704 |
| step | 706 |
| step | 708 |
| step | 710 |
| step | 712 |
| step | 714 |
| step | 716 |
| step | 718 |
| step | 720 |
| step | 722 |
| step | 724 |
| step | 726 |
| step | 728 |
| step | 700B |
| process | 300 |
| PLM system | 302 |
| structured metadata | 302a |
| unstructured raw data | 302b |
| PLM user interface | 304 |
| graph data generator | 306 |
| structured data translator | 306a |
| unstructured data parsing | 306b |
| recommendation system | 308 |
| graph database | 310 |
| verification request objects | 400 |
| verification requests for thermal analysis | 402 |
| verification requests for mechanical analysis | 404 |
| verification requests for system analysis | 406 |
| workflow | 500 |
| error | 502 |
| root-cause analysis | 504 |
| resultant analysis details | 506 |
| observations and notes | 506a |
| troubleshooting and remedies deployed | 506b |
| digitization | 508 |
| graph database | 510 |
| knowledge graph | 600 |
| CAD model 1 | 602 |
| CAD model 2 | 604 |
| CAD model 3 | 606 |
| Material 1 | 608 |
| Material 2 | 610 |
| hot condition | 612 |
| cold condition | 614 |
| workflow | 700 |
| error | 702 |
| observations digitization | 704 |
| vectorization function | 706 |
| similarity function | 708 |
| graph database | 710 |
| ranked results | 712 |
| observation and notes | 712a |
| troubleshooting and remedies deployed | 712b |

## Claims

1. A computer-implemented method (200) for automated management of a charging unit (10) for electrical applications, the method (200) comprising:
fetching, by a processor (104), one or more charging parameters of the charging unit (10);
determining, by the processor (104), a deviation in at least one of the one or more charging parameters of the charging unit (10) by comparing with respective one or more threshold limits therefor; the method **characterised in that** it further comprises the steps of:
generating, by the processor (104), an error message indicative of the determined deviation in the at least one of the one or more charging parameters of the charging unit (10);
receiving, by a server (120), in secure connection with the processor (104), the error message;
determining, by the server (120), a corrective action for the charging unit (10) as defined by a rules engine (402) based on the generated error message;
transmitting, by the server (120), via the secure connection, the determined corrective action to the processor (104); and
executing, by the processor (104), the determined corrective action for the charging unit (10).

2. The method (200) of claim 1 further comprising:
checking, by the processor (104), if the deviation in the at least one of the one or more charging parameters of the charging unit (10) persists, by comparing with the respective one or more threshold limits therefor, post execution of the determined corrective action therefor;
fetching, by the processor (104), event logs of the charging unit (10) in case of the deviation in the at least one of the one or more charging parameters of the charging unit (10) persists post execution of the determined corrective action therefor;
receiving, by the server (120), in secure connection with the processor (104), the event logs of the charging unit (10);
analysing, by the server (120), the event logs of the charging unit (10);
determining, by the server (120), a remedial action for the charging unit (10) as defined by the rules engine (402) based on the analysis of the event logs;
transmitting, by the server (120), via the secure connection, the determined remedial action to the processor (104); and
executing, by the processor (104), the determined remedial action for the charging unit (10).

3. The method (200) of claim 2 further comprising:
checking, by the processor (104), if the deviation in the at least one of the one or more charging parameters of the charging unit (10) persists, by comparing with the respective one or more threshold limits therefor, post execution of the determined remedial action therefor;
generating, by the processor (104), a fault signal indicative of a fault in the charging unit (10) in case of the deviation in the at least one of the one or more charging parameters of the charging unit (10) persists post execution of the determined remedial action therefor;
transmitting, by the processor (104), via the secure connection, event logs of the charging unit (10) to the server (120) in response to generation of the fault signal; and
communicating, by the server (120), the event logs of the charging unit (10) to an operator of the charging unit (10).

4. The method (200) of claim 1 further comprising establishing, by the processor (104), the secure connection with the server (120) in response to generation of the error message.

5. The method (200) of claim 4 further comprising:
implementing, by the processor (104), a device agent (302) to send an MQTTS command to an agent broker (304) of the server (120) to open a connection with the server (120); and
utilizing, by the processor (104), a pre-configured encryption key for the server (120) using the opened connection, to establish the secure connection with the server (120).

6. The method (200) of claim 1 further comprising:
processing, by the server (120), the error message based on reference data (406) in the rules engine (402) to determine an error code corresponding thereto; and
processing, by the server (120), the determined error code based on rules dataset (410) in the rules engine (402) to determine the corrective action for the charging unit (10).

7. The method (200) of claim 1 further comprising implementing, by the server (120), one or more of state transition workflows (604) and reference log data (606) for filtering the event logs corresponding to the error message to be processed by the rules engine (402) therein.

8. The method (200) of claim 1 further comprising analysing, by the server (120), the event logs for the one or more charging parameters of the charging unit (10) for each of an initialization session (502), a cable-check session (504), a charging session (506), and a stopping session (508) thereof.

9. A system for automated management of a charging unit (10) for electrical applications, the system comprising:
a processor (104) associated with the charging unit (10); and
a server (120) in secure communication with the processor (104);
the processor (104) configured to:
fetch one or more charging parameters of the charging unit (10);
determine a deviation in at least one of the one or more charging parameters of the charging unit (10) by comparing with respective one or more threshold limits therefor; the system **characterised in that** the processor is further adapted to generate an error message indicative of the determined deviation in the at least one of the one or more charging parameters of the charging unit (10);
the server (120) configured to:
receive, via the secure connection, the error message;
determine a corrective action for the charging unit (10) as defined by a rules engine (402) based on the generated error message; and
transmit, via the secure connection, the determined corrective action to the processor (104); and
the processor (104) is further configured to execute the determined corrective action for the charging unit (10).

10. The system of claim 9, wherein:
the processor (104) is further configured to:
check if the deviation in the at least one of the one or more charging parameters of the charging unit (10) persists, by comparing with the respective one or more threshold limits therefor, post execution of the determined corrective action therefor; and
fetch event logs of the charging unit (10) in case of the deviation in the at least one of the one or more charging parameters of the charging unit (10) persists post execution of the determined corrective action therefor;
the server (120) is further configured to:
receive, via the secure connection, the event logs of the charging unit (10);
analyse the event logs of the charging unit (10);
determine a remedial action for the charging unit (10) as defined by the rules engine (402) based on the analysis of the event logs; and
transmit, via the secure connection, the determined remedial action to the processor (104); and
the processor (104) is further configured to execute the determined remedial action for the charging unit (10).

11. The system of claim 10 wherein:
the processor (104) is further configured to:
check if the deviation in the at least one of the one or more charging parameters of the charging unit (10) persists, by comparing with the respective one or more threshold limits therefor, post execution of the determined remedial action therefor;
generate a fault signal indicative of a fault in the charging unit (10) in case of the deviation in the at least one of the one or more charging parameters of the charging unit (10) persists post execution of the determined remedial action therefor; and
transmit, via the secure connection, event logs of the charging unit (10) to the server (120) in response to generation of the fault signal; and
the server (120) is further configured to communicate the event logs of the charging unit (10) to an operator of the charging unit (10).

12. The system of claim 9, wherein the processor (104) is further configured to establish a secure connection with the server (120) in response to generation of the error message.

13. The system of claim 12, wherein the processor (104) is further configured to:
implement a device agent (302) to send an MQTTS command to an agent broker (304) of the server (120) to open a connection with the server (120); and
utilize a pre-configured encryption key for the server (120) using the opened connection, to establish the secure connection with the server (120).

14. The system of claim 9, wherein the server (120) is further configured to:
process the error message based on reference data (406) in the rules engine (402) to determine an error code corresponding thereto; and
process the determined error code based on rules dataset (410) in the rules engine (402) to determine the corrective action for the charging unit (10).

15. A computer-program product, having machine-readable instructions stored therein, that when executed by a processor (104), cause the processor (104) to perform method (200) steps according to any of the claims 1-8.

## Patentansprüche

1. Computerimplementiertes Verfahren (200) zur automatisierten Verwaltung einer Ladeeinheit (10) für elektrische Anwendungen, wobei das Verfahren (200) umfasst:
Abrufen, durch einen Prozessor (104), eines oder mehrerer Ladeparameter der Ladeeinheit (10);
Bestimmen, durch den Prozessor (104), einer Abweichung mindestens eines des einen oder der mehreren Ladeparameter der Ladeeinheit (10) durch Vergleichen mit einem oder mehreren jeweiligen Schwellenwerten dafür; wobei das Verfahren **dadurch gekennzeichnet ist, dass** es ferner die folgenden Schritte umfasst:
Erzeugen, durch den Prozessor (104), einer Fehlernachricht, die die bestimmte Abweichung des mindestens einen des einen oder der mehreren Ladeparameter der Ladeeinheit (10) angibt;
Empfangen, durch einen Server (120), in sicherer Verbindung mit dem Prozessor (104), der Fehlernachricht;
Bestimmen, durch den Server (120), einer Korrekturmaßnahme für die Ladeeinheit (10), wie von einer Regel-Engine (402) definiert, basierend auf der erzeugten Fehlernachricht;
Übertragen, durch den Server (120), über die sichere Verbindung, der bestimmten Korrekturmaßnahme an den Prozessor (104); und
Ausführen, durch den Prozessor (104), der bestimmten Korrekturmaßnahme für die Ladeeinheit (10).

2. Verfahren (200) nach Anspruch 1, ferner umfassend:
Prüfen, durch den Prozessor (104), ob die Abweichung des mindestens einen des einen oder der mehreren Ladeparameter der Ladeeinheit (10) anhält, durch Vergleichen mit dem einen oder den mehreren jeweiligen Schwellenwerten dafür, nach der Durchführung der bestimmten Korrekturmaßnahme dafür;
Abrufen, durch den Prozessor (104), von Ereignisprotokollen der Ladeeinheit (10), falls die Abweichung des mindestens eines des einen oder der mehreren Ladeparameter der Ladeeinheit (10) nach der Ausführung der bestimmten Korrekturmaßnahme dafür anhält;
Empfangen, durch den Server (120), in sicherer Verbindung mit dem Prozessor (104), der Ereignisprotokolle der Ladeeinheit (10);
Analysieren, durch den Server (120), der Ereignisprotokolle der Ladeeinheit (10);
Bestimmen, durch den Server (120), einer Abhilfemaßnahme für die Ladeeinheit (10), wie von der Regel-Engine (402) definiert, basierend auf der Analyse der Ereignisprotokolle;
Übertragen, durch den Server (120), über die sichere Verbindung, der bestimmten Abhilfemaßnahme an den Prozessor (104); und
Ausführen, durch den Prozessor (104), der bestimmten Abhilfemaßnahme für die Ladeeinheit (10).

3. Verfahren (200) nach Anspruch 2, ferner umfassend:
Prüfen, durch den Prozessor (104), ob die Abweichung des mindestens einen des einen oder der mehreren Ladeparameter der Ladeeinheit (10) anhält, durch Vergleichen mit dem einen oder den mehreren jeweiligen Schwellenwerten dafür nach der Durchführung der bestimmten Abhilfemaßnahme dafür;
Erzeugen, durch den Prozessor (104), eines Fehlersignals, das einen Fehler in der Ladeeinheit (10) angibt, falls die Abweichung des mindestens eines des einen oder der mehreren Ladeparameter der Ladeeinheit (10) nach der Ausführung der bestimmten Abhilfemaßnahme dafür anhält;
Übertragen, durch den Prozessor (104), über die sichere Verbindung, von Ereignisprotokollen der Ladeeinheit (10) an den Server (120) als Reaktion auf die Erzeugung des Fehlersignals; und
Kommunizieren, durch den Server (120), der Ereignisprotokolle der Ladeeinheit (10) mit einem Bediener der Ladeeinheit (10).

4. Verfahren (200) nach Anspruch 1, ferner umfassend Herstellen, durch den Prozessor (104), der sicheren Verbindung mit dem Server (120) als Reaktion auf die Erzeugung der Fehlernachricht.

5. Verfahren (200) nach Anspruch 4, ferner umfassend:
Implementieren, durch den Prozessor (104), eines Vorrichtungsagenten (302), um einen MQTTS-Befehl an einen Agenten-Broker (304) des Servers (120) zu senden, um eine Verbindung mit dem Server (120) zu öffnen; und
Nutzen, durch den Prozessor (104), eines vorkonfigurierten Verschlüsselungsschlüssels für den Server (120), der die geöffnete Verbindung verwendet, um die sichere Verbindung zum Server (120) herzustellen.

6. Verfahren (200) nach Anspruch 1, ferner umfassend:
Verarbeiten, durch den Server (120), der Fehlernachricht basierend auf Referenzdaten (406) in der Regel-Engine (402), um einen dazu entsprechenden Fehlercode zu bestimmen; und
Verarbeiten, durch den Server (120), des bestimmten Fehlercodes basierend auf einem Regeldatensatz (410) in der Regel-Engine (402), um die Korrekturmaßnahme für die Ladeeinheit (10) zu bestimmen.

7. Verfahren (200) nach Anspruch 1, ferner umfassend Implementieren, durch den Server (120), eines oder mehrerer von Zustandsübergangs-Workflows (604) und Referenzprotokolldaten (606) zum Filtern der Ereignisprotokolle, die der Fehlernachricht entsprechen, die von der Regel-Engine (402) darin zu verarbeiten ist.

8. Verfahren (200) nach Anspruch 1, ferner umfassend Analysieren, durch den Server (120), der Ereignisprotokolle für den einen oder die mehreren Ladeparameter der Ladeeinheit (10) für jeweils eine Initialisierungssitzung (502), eine Kabelprüfsitzung (504), eine Ladesitzung (506) und eine Stoppsitzung (508) dafür.

9. System zur automatisierten Verwaltung einer Ladeeinheit (10) für elektrische Anwendungen, wobei das System umfasst:
einen Prozessor (104), der der Ladeeinheit (10) zugeordnet ist; und
einen Server (120) in sicherer Kommunikation mit dem Prozessor (104);
wobei der Prozessor (104) ausgelegt ist zum:
Abrufen eines oder mehrerer Ladeparameter der Ladeeinheit (10);
Bestimmen einer Abweichung mindestens eines des einen oder der mehreren Ladeparameter der Ladeeinheit (10) durch Vergleichen mit einem oder mehreren jeweiligen Schwellenwerten dafür; wobei das System **dadurch gekennzeichnet ist, dass** der Prozessor ferner eingerichtet ist zum Erzeugen einer Fehlernachricht, die die bestimmte Abweichung des mindestens einen des einen oder der mehreren Ladeparameter der Ladeeinheit (10) angibt;
wobei der Server (120) ausgelegt ist zum:
Empfangen, über die sichere Verbindung, der Fehlernachricht;
Bestimmen einer Korrekturmaßnahme für die Ladeeinheit (10), wie von einer Regel-Engine (402) definiert, basierend auf der erzeugten Fehlernachricht; und
Übertragen, über die sichere Verbindung, der bestimmten Korrekturmaßnahme an den Prozessor (104); und
der Prozessor (104) ferner ausgelegt ist zum Ausführen der bestimmten Korrekturmaßnahme für die Ladeeinheit (10).

10. System nach Anspruch 9, wobei:
der Prozessor (104) ferner ausgelegt ist zum:
Prüfen, ob die Abweichung des mindestens einen des einen oder der mehreren Ladeparameter der Ladeeinheit (10) anhält, durch Vergleichen mit dem einen oder den mehreren jeweiligen Schwellenwerten dafür, nach der Durchführung der bestimmten Korrekturmaßnahme dafür; und
Abrufen von Ereignisprotokollen der Ladeeinheit (10), falls die Abweichung des mindestens eines des einen oder der mehreren Ladeparameter der Ladeeinheit (10) nach der Ausführung der dafür bestimmten Korrekturmaßnahme anhält;
wobei der Server (120) ferner ausgelegt ist zum:
Empfangen, über die sichere Verbindung, der Ereignisprotokolle der Ladeeinheit (10);
Analysieren der Ereignisprotokolle der Ladeeinheit (10);
Bestimmen einer Abhilfemaßnahme für die Ladeeinheit (10), wie von der Regel-Engine (402) definiert, basierend auf der Analyse der Ereignisprotokolle; und
Übertragen, über die sichere Verbindung, der bestimmten Abhilfemaßnahme an den Prozessor (104); und
der Prozessor (104) ferner ausgelegt ist zum Ausführen der bestimmten Abhilfemaßnahme für die Ladeeinheit (10).

11. System nach Anspruch 10, wobei:
der Prozessor (104) ferner ausgelegt ist zum:
Prüfen, ob die Abweichung des mindestens einen des einen oder der mehreren Ladeparameter der Ladeeinheit (10) anhält, durch Vergleichen mit dem einen oder den mehreren jeweiligen Schwellenwerten dafür, nach der Durchführung der bestimmten Abhilfemaßnahme dafür;
Erzeugen eines Fehlersignals, das einen Fehler in der Ladeeinheit (10) angibt, falls die Abweichung des mindestens eines des einen oder der mehreren Ladeparameter der Ladeeinheit (10) nach der Ausführung der dafür bestimmten Abhilfemaßnahme anhält; und
Übertragen, über die sichere Verbindung, von Ereignisprotokollen der Ladeeinheit (10) an den Server (120) als Reaktion auf die Erzeugung des Fehlersignals; und
der Server (120) ferner ausgelegt ist zum Kommunizieren der Ereignisprotokolle der Ladeeinheit (10) an einen Bediener der Ladeeinheit (10).

12. System nach Anspruch 9, wobei der Prozessor (104) ferner ausgelegt ist zum Herstellen einer sicheren Verbindung mit dem Server (120) als Reaktion auf die Erzeugung der Fehlernachricht.

13. System nach Anspruch 12, wobei der Prozessor (104) ferner ausgelegt ist zum:
Implementieren eines Vorrichtungsagenten (302), um einen MQTTS-Befehl an einen Agenten-Broker (304) des Servers (120) zu senden, um eine Verbindung mit dem Server (120) zu öffnen; und
Nutzen eines vorkonfigurierten Verschlüsselungsschlüssels für den Server (120), der die geöffnete Verbindung verwendet, um die sichere Verbindung zum Server (120) herzustellen.

14. System nach Anspruch 9, wobei der Server (120) ferner ausgelegt ist zum:
Verarbeiten der Fehlernachricht basierend auf Referenzdaten (406) in der Regel-Engine (402), um einen dazu entsprechenden Fehlercode zu bestimmen; und
Verarbeiten des bestimmten Fehlercodes basierend auf einem Regeldatensatz (410) in der Regel-Engine (402), um die Korrekturmaßnahme für die Ladeeinheit (10) zu bestimmen.

15. Computerprogrammprodukt mit darin gespeicherten maschinenlesbaren Anweisungen, die bei Ausführung durch einen Prozessor (104) den Prozessor (104) zum Durchführen von Schritten des Verfahrens (200) nach einem der Ansprüche 1-8 veranlassen.

## Revendications

1. Procédé (200), mis en œuvre par ordinateur, de gestion automatisée d'une unité de charge (10) pour des applications électriques, le procédé (200) comprenant :
la récupération, par un processeur (104), d'un ou de plusieurs paramètres de charge de l'unité de charge (10) ;
la détermination, par le processeur (104), d'un écart dans au moins un du ou des paramètres de charge de l'unité de charge (10) par comparaison avec un ou plusieurs seuils limites respectifs pour celle-ci ; le procédé étant **caractérisé en ce qu'**il comprend en outre les étapes suivantes :
la génération, par le processeur (104), d'un message d'erreur indiquant l'écart déterminé dans l'au moins un du ou des paramètres de charge de l'unité de charge (10) ;
la réception, par un serveur (120), en connexion sécurisée avec le processeur (104), du message d'erreur ;
la détermination, par le serveur (120), d'une mesure corrective pour l'unité de charge (10) telle que définie par un moteur de règles (402) sur la base du message d'erreur généré ;
la transmission, par le serveur (120), via la connexion sécurisée, de la mesure corrective déterminée au processeur (104) ; et
l'exécution, par le processeur (104), de la mesure corrective déterminée pour l'unité de charge (10).

2. Procédé (200) de la revendication 1, comprenant en outre :
la vérification, par le processeur (104), si l'écart dans l'au moins un du ou des paramètres de charge de l'unité de charge (10) persiste, par comparaison avec le ou les seuils limites respectifs pour celle-ci, après exécution de la mesure corrective déterminée pour celle-ci ;
la récupération, par le processeur (104), des journaux d'événements de l'unité de charge (10) dans le cas où l'écart dans l'au moins un du ou des paramètres de charge de l'unité de charge (10) persiste après exécution de la mesure corrective déterminée pour celle-ci ;
la réception, par le serveur (120), en connexion sécurisée avec le processeur (104), des journaux d'événements de l'unité de charge (10) ;
l'analyse, par le serveur (120), des journaux d'événements de l'unité de charge (10) ;
la détermination, par le serveur (120), d'une mesure de remédiation pour l'unité de charge (10) telle que définie par le moteur de règles (402) sur la base de l'analyse des journaux d'événements ;
la transmission, par le serveur (120), via la connexion sécurisée, de la mesure de remédiation déterminée au processeur (104) ; et
l'exécution, par le processeur (104), de la mesure de remédiation déterminée pour l'unité de charge (10).

3. Procédé (200) de la revendication 2, comprenant en outre :
la vérification, par le processeur (104), si l'écart dans l'au moins un du ou des paramètres de charge de l'unité de charge (10) persiste, par comparaison avec le ou les seuils limites respectifs pour celle-ci, après exécution de la mesure de remédiation déterminée pour celle-ci ;
la génération, par le processeur (104), d'un signal de défaut indiquant un défaut dans l'unité de charge (10) dans le cas où l'écart dans l'au moins un du ou des paramètres de charge de l'unité de charge (10) persiste après exécution de la mesure de remédiation déterminée pour celle-ci ;
la transmission, par le processeur (104), via la connexion sécurisée, de journaux d'événements de l'unité de charge (10) au serveur (120) en réponse à la génération du signal de défaut ; et
la communication, par le serveur (120), des journaux d'événements de l'unité de charge (10) à un opérateur de l'unité de charge (10).

4. Procédé (200) selon la revendication 1, comprenant en outre l'établissement, par le processeur (104), de la connexion sécurisée avec le serveur (120) en réponse à la génération du message d'erreur.

5. Procédé (200) de la revendication 4, comprenant en outre :
la mise en œuvre, par le processeur (104), d'un agent de dispositif (302) en vue d'envoyer une commande MQTTS à un courtier d'agents (304) du serveur (120) afin d'ouvrir une connexion avec le serveur (120) ; et
l'utilisation, par le processeur (104), d'une clé de chiffrement préconfigurée pour le serveur (120) au moyen de la connexion ouverte, afin d'établir la connexion sécurisée avec le serveur (120).

6. Procédé (200) de la revendication 1, comprenant en outre :
le traitement, par le serveur (120), du message d'erreur sur la base de données de référence (406) dans le moteur de règles (402) afin de déterminer un code d'erreur correspondant à celui-ci ; et
le traitement, par le serveur (120), du code d'erreur déterminé sur la base d'un ensemble de données de règles (410) dans le moteur de règles (402) afin de déterminer la mesure corrective pour l'unité de charge (10).

7. Procédé (200) selon la revendication 1, comprenant en outre la mise en œuvre, par le serveur (120), d'un ou plusieurs des flux de travail de transition d'état (604) et de données de journaux de référence (606) pour le filtrage des journaux d'événements correspondant au message d'erreur à traiter par le moteur de règles (402).

8. Procédé (200) selon la revendication 1, comprenant en outre l'analyse, par le serveur (120), des journaux d'événements pour le ou les paramètres de charge de l'unité de charge (10) pour chacune d'une session d'initialisation (502), d'une session de contrôle de câble (504), d'une session de charge (506) et d'une session d'arrêt (508) de celle-ci.

9. Système de gestion automatisée d'une unité de charge (10) pour des applications électriques, le système comprenant :
un processeur (104) associé à l'unité de charge (10) ; et
un serveur (120) en communication sécurisée avec le processeur (104) ;
le processeur (104) étant configuré pour :
récupérer un ou plusieurs paramètres de charge de l'unité de charge (10) ;
déterminer un écart dans au moins un du ou des paramètres de charge de l'unité de charge (10) par comparaison avec un ou plusieurs seuils limites respectifs pour celle-ci ; le système étant **caractérisé en ce que** le processeur est adapté en outre à générer un message d'erreur indiquant l'écart déterminé dans l'au moins un du ou des paramètres de charge de l'unité de charge (10) ;
le serveur (120) est configuré pour :
recevoir, via la connexion sécurisée, le message d'erreur ;
déterminer une mesure corrective pour l'unité de charge (10) telle que définie par un moteur de règles (402) sur la base du message d'erreur généré ; et
transmettre, via la connexion sécurisée, la mesure corrective déterminée au processeur (104) ; et
le processeur (104) est configuré en outre pour exécuter la mesure corrective déterminée pour l'unité de charge (10).

10. Système selon la revendication 9, dans lequel :
le processeur (104) est configuré en outre pour :
vérifier si l'écart dans l'au moins un du ou des paramètres de charge de l'unité de charge (10) persiste, par comparaison avec le ou les seuils limites respectifs pour celle-ci, après exécution de la mesure corrective déterminée pour celle-ci ; et
récupérer des journaux d'événements de l'unité de charge (10) dans le cas où l'écart dans l'au moins un du ou des paramètres de charge de l'unité de charge (10) persiste après exécution de la mesure corrective déterminée pour celle-ci ;
le serveur (120) est configuré en outre pour :
recevoir, via la connexion sécurisée, les journaux d'événements de l'unité de charge (10) ;
analyser les journaux d'événements de l'unité de charge (10) ;
déterminer une mesure de remédiation pour l'unité de charge (10) telle que définie par le moteur de règles (402) sur la base de l'analyse des journaux d'événements ; et
transmettre, via la connexion sécurisée, la mesure de remédiation déterminée au processeur (104) ; et
le processeur (104) est configuré en outre pour exécuter la mesure de remédiation déterminée pour l'unité de charge (10).

11. Système selon la revendication 10, dans lequel :
le processeur (104) est configuré en outre pour :
vérifier si l'écart dans l'au moins un du ou des paramètres de charge de l'unité de charge (10) persiste, par comparaison avec le ou les seuils limites respectifs pour celle-ci, après exécution de la mesure de remédiation déterminée pour celle-ci ; et
générer un signal de défaut indiquant un défaut dans l'unité de charge (10) dans le cas où l'écart dans l'au moins un du ou des paramètres de charge de l'unité de charge (10) persiste après exécution de la mesure de remédiation déterminée pour celle-ci ; et
transmettre, via la connexion sécurisée, des journaux d'événements de l'unité de charge (10) au serveur (120) en réponse à la génération du signal de défaut ; et
le serveur (120) est configuré en outre pour communiquer les journaux d'événements de l'unité de charge (10) à un opérateur de l'unité de charge (10).

12. Système selon la revendication 9, dans lequel le processeur (104) est configuré en outre pour établir une connexion sécurisée avec le serveur (120) en réponse à la génération du message d'erreur.

13. Système selon la revendication 12, dans lequel le processeur (104) est configuré en outre pour :
mettre en œuvre un agent de dispositif (302) en vue d'envoyer une commande MQTTS à un courtier d'agents (304) du serveur (120) afin d'ouvrir une connexion avec le serveur (120) ; et
utiliser une clé de chiffrement préconfigurée pour le serveur (120) au moyen de la connexion ouverte, afin d'établir la connexion sécurisée avec le serveur (120).

14. Système selon la revendication 9, dans lequel le serveur (120) est configuré en outre pour :
traiter le message d'erreur sur la base de données de référence (406) dans le moteur de règles (402) afin de déterminer un code d'erreur correspondant à celui-ci ; et
traiter le code d'erreur déterminé sur la base d'un ensemble de données de règles (410) dans le moteur de règles (402) afin de déterminer la mesure corrective pour l'unité de charge (10).

15. Produit-programme d'ordinateur, dans lequel sont stockées des instructions lisibles par machine qui, lorsqu'elles sont exécutées par un processeur (104), amènent le processeur (104) à réaliser les étapes du procédé (200) selon l'une quelconque des revendications 1 à 8.
